(19) **Europäisches Patentamt / European Patent Office / Office européen des brevets**

(11) **EP 4 787 759 A1**

(12) **EUROPEAN PATENT APPLICATION**
published in accordance with Art. 153(4) EPC

(43) Date of publication:
**05.08.2026 Bulletin 2026/32**

(21) Application number: **24876694.1**

(22) Date of filing: **12.10.2024**

(51) International Patent Classification (IPC):
**H04L 5/00** (2006.01)

(52) Cooperative Patent Classification (CPC):
**H04L 5/00; H04L 27/26**

(86) International application number:
**PCT/CN2024/124487**

(87) International publication number:
**WO 2025/077889 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.10.2023 CN 202311332703**

(71) Applicant: HUAWEI TECHNOLOGIES CO., LTD.
**Shenzhen, Guangdong 518129 (CN)**

(72) Inventors:
- **CAI, Shijie**
  **Shenzhen, Guangdong 518129 (CN)**
- **LI, Xi**
  **Shenzhen, Guangdong 518129 (CN)**
- **LIU, Kunpeng**
  **Shenzhen, Guangdong 518129 (CN)**

(74) Representative: **Körber, Martin Hans**
**Mitscherlich PartmbB**
**Karlstraße 7**
**80333 München (DE)**

(54) **COMMUNICATION METHOD AND APPARATUS, AND READABLE STORAGE MEDIUM**

(57) Embodiments of this application disclose a communication method and apparatus, and a readable storage medium, and relate to the field of communication technologies, enabling flexible configuration of an SRS signal. The method includes transmitting first indication information that indicates a plurality of non-consecutive orthogonal frequency division multiplexing OFDM symbols, where the plurality of OFDM symbols are used by a terminal device to send an SRS signal to a network device, and correspond to a same SRS bandwidth and a same antenna port of the terminal device.

[FIG. 3]

```
  Network device                                    Terminal device
        |                                                  |
        |  S301: First indication information,             |
        |  indicating a plurality of non-                  |
        |  consecutive SRS time domain                     |
        |  resources, where the plurality of SRS           |
        |  time domain resources correspond to a           |
        |  same SRS bandwidth and a same                   |
        |  antenna port of the terminal device             |
        | -----------------------------------------------> |
        |                                                  |
        |          S302: SRS signal                        |
        | <- - - - - - - - - - - - - - - - - - - - - - - - |
        |                                                  |
```

# Description

This application claims priority to Chinese Patent Application No. 202311332703.X, filed with the China National Intellectual Property Administration on October 13, 2023 and entitled "COMMUNICATION METHOD AND APPARATUS, AND READABLE STORAGE MEDIUM", which is incorporated herein by reference in its entirety.

## TECHNICAL FIELD

This application relates to the field of communication technologies, and in particular, to a communication method and apparatus, and a readable storage medium.

## BACKGROUND

In a communication system, a network device may obtain channel state information (channel state information, CSI) of an uplink (or downlink) channel by measuring a sounding reference signal (sounding reference signal, SRS) sent by a terminal device. However, existing SRS signal configuration methods lack flexibility.

## SUMMARY

Embodiments of this application provide a communication method and apparatus, and a readable storage medium, so that an OFDM symbol used for sending an SRS signal can be flexibly configured.

The following technical solutions are used in embodiments of this application.

According to a first aspect, a communication method is provided. The method may be performed by a terminal device or a network device, or may be performed by a module (for example, a processor, a chip, or a chip system) used in the terminal device or the network device. The method includes: transmitting first indication information, where the first indication information indicates a plurality of non-consecutive orthogonal frequency division multiplexing OFDM symbols, the plurality of OFDM symbols are used by a terminal device to send an SRS signal to a network device, and the plurality of OFDM symbols correspond to a same SRS bandwidth and a same antenna port of the terminal device.

According to the communication method provided in this embodiment of this application, the plurality of non-consecutive OFDM symbols may be configured to send an SRS signal. This is more flexible than existing configuration methods that allow only configuration of a plurality of consecutive DOFM symbols.

With reference to the first aspect, in a possible design, the network device includes N*M antenna ports, where M is a quantity of radio frequency chains included in the network device, and N is a positive integer greater than 1; and a quantity of the plurality of OFDM symbols is K, and K is a positive integer less than N.

Based on existing SRS signal configuration methods, if the network device includes N*M antenna ports, N OFDM symbols for sending an SRS signal must be configured to allow the network device to obtain channel state information. In contrast, with the proposed solution, a quantity of symbols configured for sending the SRS signal may be less than N, thereby reduce resource overhead.

With reference to the first aspect, in a possible design, the quantity and/or positions of the plurality of OFDM symbols are determined based on spatial sparsity characteristics of a channel between the terminal device and the network device.

Based on this solution, an OFDM symbol for sending an SRS signal may be flexibly configured based on the spatial sparsity characteristics of a channel, thereby reducing resource overhead while improving quality of the obtained channel and system transmission performance.

With reference to the first aspect, in a possible design, the method further includes: receiving the SRS signal on the plurality of OFDM symbols; and determining channel state information based on the SRS signal.

Based on this solution, the network device may receive the SRS signal on the plurality of configured OFDM symbols, and further determine the channel state information to complete channel estimation.

With reference to the first aspect, in a possible design, the first indication information indicates a time-domain start position of a first time domain resource and positions of the plurality of OFDM symbols in the first time domain resource.

This solution provides a manner in which the first indication information indicates the plurality of OFDM symbols.

With reference to the first aspect, in a possible design, the time-domain start position of the first time domain resource is a time domain position of a $1^{st}$ OFDM symbol among the plurality of OFDM symbols.

With reference to the first aspect, in a possible design, the positions of the plurality of OFDM symbols in the first time domain resource are indicated by at least one bit value.

With reference to the first aspect, in a possible design, if the network device includes the N*M antenna ports, where M is the quantity of radio frequency chains included in the network device, the positions of the plurality of OFDM symbols in the first time domain resource are indicated by N bit values. Alternatively, the positions of the plurality of OFDM symbols in the first time domain resource are indicated by L-1 bit values, where L is a quantity of OFDM symbols included in the first time domain resource.

With reference to the first aspect, in a possible design, the plurality of OFDM symbols are located in a same slot, or the plurality of OFDM symbols are located in a plurality of adjacent slots.

With reference to the first aspect, in a possible design, the method further includes: sending second indication information, where the second indication information indicates to delete a first OFDM symbol from the plurality of OFDM symbols; or the second indication information indicates to add at least one OFDM symbol used for SRS transmission.

Based on this solution, an OFDM symbol used for sending an SRS signal may be dynamically added or deleted, to improve system transmission performance.

With reference to the first aspect, in a possible design, a position of the first OFDM symbol is indicated by the second indication information or is preset.

With reference to the first aspect, in a possible design, a position of the at least one OFDM symbol used for SRS transmission is indicated by the second indication information or is preset.

According to a second aspect, a communication apparatus is provided, used to perform the foregoing various methods. The communication apparatus may be the terminal device or the network device in the first aspect or any one of the implementations of the first aspect, an apparatus including the terminal device or the network device, or an apparatus included in the terminal device or the network device, for example, a chip. The communication apparatus includes a corresponding module, unit, or means (means) for implementing the foregoing method. The module, unit, or means may be implemented by using hardware or software, or implemented by using hardware by executing corresponding software. The hardware or the software includes one or more modules or units corresponding to the foregoing functions.

In some possible designs, the communication apparatus may include a transceiver module and a processing module. The transceiver module may also be referred to as a transceiver unit, and is configured to implement a sending function and/or a receiving function in the first aspect and any one of the possible implementations of the first aspect. The transceiver module may include a transceiver circuit, a transceiver machine, a transceiver, or a communication interface. The processing module may be configured to implement a processing function in the first aspect and any one of the possible implementations of the first aspect.

In some possible designs, the transceiver module includes a sending module and a receiving module, respectively configured to implement the sending function and the receiving function in the first aspect and any one of the possible implementations of the first aspect.

According to a third aspect, a communication apparatus is provided, including a processor and a memory. The memory is configured to store computer instructions. When the processor executes the instructions, the communication apparatus is enabled to perform the method in any one of the foregoing aspects. The communication apparatus may be the terminal device or the network device in the first aspect or any one of the implementations of the first aspect, an apparatus including the terminal device or the network device, or an apparatus included in the terminal device or the network device, for example, a chip.

According to a fourth aspect, a communication apparatus is provided, including a processor and a communication interface. The communication interface is configured to communicate with a module other than the communication apparatus. The processor is configured to execute a computer program or instructions, so that the communication apparatus performs the method in any one of the foregoing aspects. The communication apparatus may be the terminal device or the network device in the first aspect or any one of the implementations of the first aspect, an apparatus including the terminal device or the network device, or an apparatus included in the terminal device or the network device, for example, a chip.

According to a fifth aspect, a communication apparatus is provided, including at least one processor. The processor is configured to execute a computer program or instructions stored in a memory, so that the communication apparatus performs the method in any one of the foregoing aspects. The memory may be coupled to the processor, or may be independent of the processor. The communication apparatus may be the terminal device or the network device in the first aspect or any one of the implementations of the first aspect, an apparatus including the terminal device or the network device, or an apparatus included in the terminal device or the network device, for example, a chip.

According to a sixth aspect, a computer-readable storage medium is provided. The computer-readable storage medium stores a computer program or instructions. When the computer program or the instructions are run on a communication apparatus, the communication apparatus is enabled to perform the method in any one of the foregoing aspects or any implementation of the aspect.

According to a seventh aspect, a computer program product including instructions is provided. When the computer program product runs on a communication apparatus, the communication apparatus is enabled to perform the method in any one of the foregoing aspects or any implementation of the aspect.

According to an eighth aspect, a communication apparatus (for example, the communication apparatus may be a chip or a chip system) is provided. The communication apparatus includes a processor, configured to implement the function in any one of the foregoing aspects or any implementation of the aspect.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that, when the communication apparatus provided in any one of the second aspect to the eighth aspect is a chip, the foregoing sending action/function may be understood as an output, and the foregoing receiving action/function may be understood as an input.

For technical effects brought by any implementation of the second aspect to the eighth aspect, refer to technical effects brought by a corresponding implementation in the first aspect. Details are not described herein again.

It should be noted that various possible implementations of any one of the foregoing aspects may be combined provided that the solutions are not contradictory.

BRIEF DESCRIPTION OF DRAWINGS

FIG. 1A and FIG. 1B are a diagram of an HBF architecture;

FIG. 2 is a diagram of a structure of a communication system according to an embodiment of this application;

FIG. 3 is an interaction diagram of a communication method according to an embodiment of this application;

FIG. 4 is a diagram of receiving an SRS signal on a network side according to an embodiment of this application;

FIG. 5 is a diagram of sending an SRS signal by a terminal device according to an embodiment of this application;

FIG. 6 is a diagram of receiving an SRS signal through an antenna port on a network side according to an embodiment of this application;

FIG. 7 is a diagram of transmitting an SRS signal on an SRS time domain resource according to an embodiment of this application;

FIG. 8 is a diagram of a mathematical representation of compressive sensing according to an embodiment of this application;

FIG. 9 is a diagram of determining a quantity of SRS time domain resources based on spatial sparsity characteristics according to an embodiment of this application;

FIG. 10 is a diagram of determining a position of an SRS time domain resource based on spatial sparsity characteristics according to an embodiment of this application;

FIG. 11 is a diagram of indicating an SRS time domain resource according to an embodiment of this application;

FIG. 12 is another diagram of indicating an SRS time domain resource according to an embodiment of this application;

FIG. 13 is a diagram in which a first time domain resource is distributed in consecutive slots according to an embodiment of this application;

FIG. 14 is another diagram in which a first time domain resource is distributed in consecutive slots according to an embodiment of this application;

FIG. 15 is a diagram of deleting an SRS time domain resource according to an embodiment of this application;

FIG. 16 is a diagram of adding an SRS time domain resource according to an embodiment of this application;

FIG. 17 is a composition diagram of a communication apparatus according to an embodiment of this application; and

FIG. 18 is a diagram of a hardware structure of a communication apparatus according to an embodiment of this application.

DESCRIPTION OF EMBODIMENTS

For ease of understanding of technical solutions in embodiments of this application, the following first briefly describes technologies related to this application.

1. SRS signal

The SRS signal is a reference signal sent by a terminal device. A network device may obtain channel state information of an uplink (or downlink) channel via the SRS signal. For example, in a new radio access technology (new radio access technology, NR) system, the network device may measure a received SRS signal, to obtain channel state information of an uplink channel. In a time division duplexing (time division duplexing, TDD) system, the network device may further obtain, by utilizing channel reciprocity, channel state information of a downlink channel by measuring an SRS signal.

It may be understood that, because the channel state information may be obtained by measuring the SRS signal, measuring the SRS signal may also be referred to as measuring a channel, that is, measuring the SRS signal is to measure the channel.

In this specification, a resource used for transmitting an SRS signal is referred to as an SRS resource. It may be understood that, on a network device side, the SRS resource is used to receive an SRS signal, and on a terminal device side, the SRS resource is used to send the SRS signal.

In this specification, a time domain resource of the SRS resource is referred to as an SRS time domain resource. Unless otherwise specified, in this specification, sending an SRS signal once may be understood as sending the SRS signal on one SRS time domain resource. Receiving the SRS signal once may be understood as receiving the SRS signal on one SRS time domain resource.

2. Antenna port (antenna port)

The antenna port may also be briefly referred to as a port. One antenna port may be configured for each virtual antenna. The virtual antenna is a transmit antenna that can be identified by a receiver (for the SRS signal in this specification, the receiver is the network device), or is a transmit antenna that can be distinguished in space. Each virtual antenna may be a weighted combination of a plurality of physical antennas, and each antenna port may correspond to one reference signal port.

In this specification, an antenna port in an SRS resource may also be referred to as an SRS port. Each SRS resource includes {1, 2, 4} SRS ports. Each SRS port corresponds to a specific time-frequency-code resource. In an ideal case, the SRS ports are orthogonal. Each SRS port corresponds to a physical antenna or a virtual antenna of the terminal device.

It should be understood that different antenna ports in one SRS resource may occupy completely same symbols, and multiplexing is performed through frequency division (occupying different subcarriers) or code division (using different ZC sequences (Zadoff-chu sequences) or different cyclic shifts of a same sequence). There is a correspondence between a reference signal resource and a reference signal. For a specific correspondence, refer to descriptions in the existing standard. Further, in some scenarios, the reference signal resource and the reference signal may be equivalent.

3. Compressive sensing (also referred to as compressive sampling or sparse sampling) (compressive sensing, CS)

Sampling is a necessary process for converting an analog signal into a digital signal. According to the conventional Nyquist sampling theorem, to enable a digital signal obtained through sampling to retain all information in an original analog signal, a sampling frequency needs to be greater than twice a highest frequency in the signal. However, according to the compressive sensing theory, if a signal is sparse, the signal can be reconstructed and recovered based on sampling points less than those required by the Nyquist sampling theorem. In other words, compared with the Nyquist sampling theorem, the compressive sensing theory can use sparsity of the signal, to restore the original signal from fewer measurement values.

A core idea of the compressive sensing theory mainly includes two points. A first point is the sparsity of the signal. A signal having sparsity contains many zero elements. In this case, information can be compressed, and the information can be obtained as long as a non-zero element is found. The sparsity can be simply and intuitively understood as follows: If a signal has only a small quantity of non-zero values in a domain, the signal is sparse in the domain, and the domain is also referred to as a sparse domain of the signal. For compressive sensing, if a signal has sparsity or approximately meets sparsity (that is, most values of the signal in a domain tend to be 0), the signal may be considered as a compressible signal, and the signal may be compressed. In other words, the signal may be sampled at a density lower than a sampling density required by the Nyquist sampling theorem. The compressed signal may be reconstructed in the sparse domain of the signal, to obtain a recovered signal. For example, if the signal is sparse in frequency domain, the original signal may be recovered in frequency domain in a specific reconstruction method.

The other point is an incoherence property. Useful information of the sparse signal may be obtained by compressing the signal into small sample data in a non-adaptive sampling method. Theoretically, it is proved that a sampling method of compressive sensing is only a simple operation of correlating the signal with a group of determined waveforms, and these waveforms are required to be uncorrelated to the sparse space in which the signal is located.

The compressive sensing theory can be applied to signal processing, to obtain and reconstruct compressible signals.

4. Hybrid beamforming (hybrid beamforming, HBF)

In recent years, with rapid development of wireless communication technologies, a massive multiple-input multiple-output (multiple-input multiple-output, MIMO) communication technology is widely applied. However, with an increase in wireless communication frequency bands, a large quantity of antenna components included in a MIMO system also bring great challenges: (1) Use of a large quantity of radio frequency (radio frequency, RF) chains (chain) increases costs and energy consumption of a system; and (2) Determining channel state information between each transmit antenna and each receive antenna requires a significant amount of spectrum resources.

For the foregoing problems, an effective solution is to use an HBF technology. HBF is a technology that combines analog beamforming in a radio frequency domain with digital beamforming in a baseband. Only a small quantity of uplink and downlink radio frequency chains (RF chain) are needed to enable high-performance transmission. In addition, if appropriate beamforming is used, this technology can obtain performance gains that are close to those of full digital beamforming.

To form a narrow beam, an HBF architecture still needs to retain a large-scale antenna array. Based on this, one idea for reducing the quantity of radio frequency chains is that each radio frequency chain is connected to a plurality of antennas through a plurality of phase shifters. In this way, a transmitted signal is a superposition of a plurality of phase-shifted versions of a reference signal in space, so that a specific direction can be directed. Compared with a complete radio frequency chain, the phase shifter is much cheaper and consumes much less power.

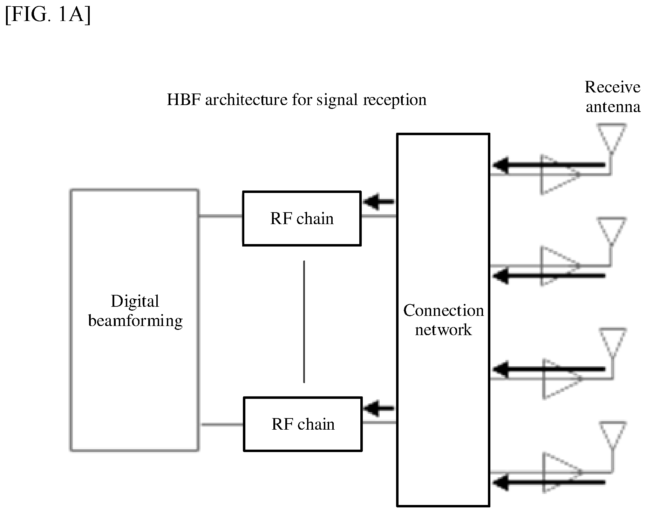

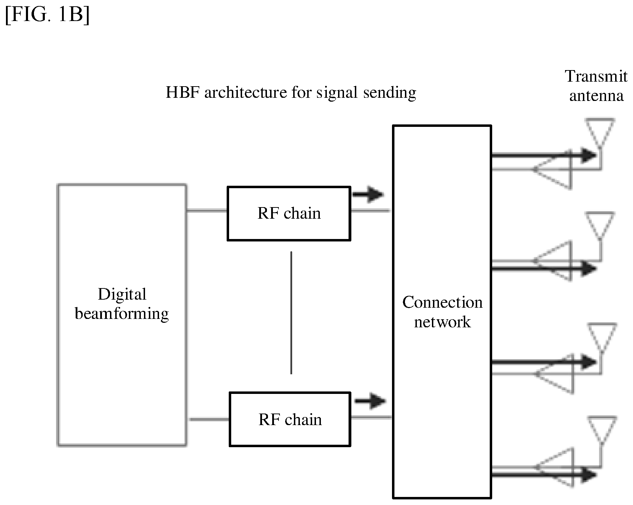

For example, FIG. 1 A and FIG. 1B are a diagram of a possible HBF architecture. As shown in FIG. 1A and FIG. 1B, in the HBF architecture, a digital (digital) beamforming (beamforming) module is connected to a plurality of radio frequency chains, where one radio frequency chain may be connected to a plurality of antennas through a connection network. As shown in FIG. 1A, when a signal is received via the HBF architecture, each receive antenna transmits the received signal to the plurality of connected radio frequency chains. As shown in FIG. 1B, when a signal is sent via the HBF architecture, each radio frequency chain transmits the signal to the plurality of connected transmit antennas for sending.

In this specification, if a receiver (for an SRS signal in this specification, the receiver is a network device) receives a signal via the architecture in which each radio frequency chain is connected to a plurality of antennas, a quantity of antenna ports included in the receiver may be in a mapping relationship with a quantity of radio frequency chains. In a mathematical form, if the quantity of radio frequency chains is M, the quantity of antenna ports may be N*M, where N is a positive integer greater than 1. In addition, in this specification, an architecture including M radio frequency chains and N*M antenna ports may also be referred to as an M-drive N*M architecture, that is, M radio frequency chains drive N*M antenna ports.

It should be noted that a quantity of antenna ports included in a transmitter is not limited in this specification.

In a possible case, the quantity of antenna ports included in the receiver may be determined based on a quantity of elements on the antenna. The element is a basic unit of the antenna, and has functions of guiding and amplifying an electromagnetic wave. For example, it is assumed that the quantity of radio frequency chains included in the receiver is M, and a total quantity of elements on the antenna is N*M, where N is a positive integer greater than 1. In this case, the quantity of antenna ports included in the receiver may also be N*M.

Currently, a unit of a time domain resource of the SRS signal is an orthogonal frequency division multiplexing (orthogonal frequency division multiplexing, OFDM) symbol. When configuring the SRS signal for a terminal device, the network device indicates one start OFDM symbol and a quantity of consecutive OFDM symbols after the start ODFM symbol, so that a plurality of consecutive ODFM symbols are configured, for sending the SRS signal. For example, it is assumed that the network device indicates that the start OFDM symbol is a 5th OFDM symbol in a slot, and indicates that the quantity of symbols is 5. In this case, the OFDM symbols that are configured by the network device and that are used for sending the SRS signal are six consecutive OFDM symbols: the 5th symbol, a 6th symbol, a 7th symbol, an 8th symbol, a 9th symbol, and a 10th symbol in the slot. It can be learned that, in an existing method for configuring an SRS time domain resource, only a plurality of consecutive OFDM symbols can be configured, and the method is not flexible enough. Based on this problem, an embodiment of this application provides a communication method, to flexibly configure an SRS time domain resource. The following describes specific implementations of the communication method provided in embodiments of this application.

Unless otherwise specified, "/" in the descriptions of this application indicates an "or" relationship between associated objects. For example, A/B may indicate A or B. In this application, "and/or" indicates only an association relationship for describing associated objects and indicates that three relationships may exist. For example, A and/or B may indicate the following three cases: Only A exists, both A and B exist, and only B exists. A and B may be singular or plural. In addition, in the descriptions of this application, unless otherwise specified, "a plurality of" means two or more than two. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In embodiments of this application, "indication" may include a direct indication and an indirect indication, or may include an explicit indication and an implicit indication. Information indicated by a piece of information (for example, the following first indication information) is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overhead to some extent. In addition, a common part of all pieces of information may further be identified and indicated in a unified manner, to reduce indication overhead caused by separately indicating same information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit device by sending configuration information to a receive device.

In embodiments of this application, "predefined, "predefinition, "preconfigured", or "preconfiguration" may be implemented by pre-storing corresponding code or a corresponding table in a device, or may be implemented in another manner for indicating related information, for example, may be burnt into the device before delivery of the device. A specific implementation is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments in this application.

The "protocol" in embodiments of this application may be a protocol family in the communication field, a standard protocol with a frame structure similar to the protocol family, or a related protocol applied to a future communication system. This is not specifically limited in embodiments of this application.

In embodiments of this application, descriptions such as "when...", "in a case of...", and "if" all mean that a device performs corresponding processing in an objective case, and do not limit time, and the device is not required to perform a determining action during implementation. This does not mean that there is another limitation.

Technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (4th generation, 5G) mobile communication system and an evolved system thereof, a MIMO system, a vehicle to everything (vehicle to everything, V2X) system, an LTE and new radio (new radio, NR) hybrid networking system, a device-to-device (device-to-device, D2D) system, a machine to machine (machine to machine, M2M) communication system, an internet of things (internet of things, IOT), or another next-generation communication system, for example, a 6th generation (6th generation, 6G) mobile communication system.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

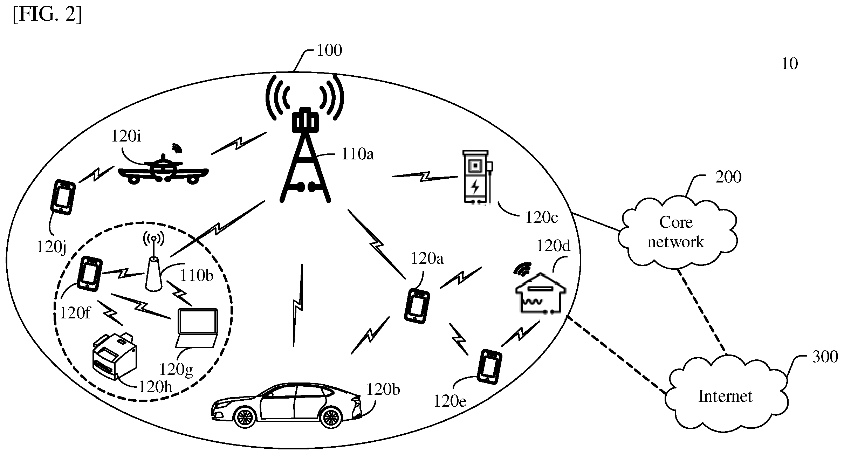

FIG. 2 is a diagram of a possible and non-limiting communication system to which an embodiment of this application is applicable. As shown in FIG. 2, the communication system 10 includes a radio access network (radio access network, RAN) 100. The RAN 100 includes at least one RAN node (for example, 110a and 110b in FIG. 2, collectively referred to as 110) and at least one terminal device (for example, 120a to 120j in FIG. 2, collectively referred to as 120). The RAN 100 may further include another RAN node, for example, a wireless relay device and/or a wireless backhaul device (not shown in FIG. 2). The terminal device 120 is connected to the RAN node 110 in a wireless manner.

Optionally, the communication system may further include a core network (core network, CN) 200. The RAN node 110 may be connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

Optionally, the communication system 10 may further include an Internet 300. The internet may be connected to the core network or the RAN.

The RAN 100 may be a 3GPP-related cellular system, for example, a 4G or 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be sometimes referred to as an access network device, a RAN entity, an access node, or the like, and forms a part of the communication system, to help the terminal device implement radio access. A plurality of RAN nodes 110 in the communication system 10 may be nodes of a same type, or may be nodes of different types. In some scenarios, roles of the RAN node 110 and the terminal device 120 are opposite. For example, a network element 120i in FIG. 2 may be a helicopter or an uncrewed aerial vehicle, and may be set as a mobile network device. For a terminal device 120j that accesses the RAN 100 through the network element 120i, the network element 120i is a network device. However, for a network device 110a, the network element 120i is a terminal device. Both the RAN node 110 and the terminal device 120 are sometimes referred to as communication apparatuses. For example, the network elements 110a and 110b in FIG. 2 may be understood as communication apparatuses having a function of the network device, and the network elements 120a to 120j may be understood as communication apparatuses having a function of the terminal device.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 2), a micro base station or an indoor station (for example, 110b in FIG. 2), a relay node or a donor node, or a radio controller in a CRAN scenario. Optionally, the RAN node may alternatively be a server, a wearable device, a vehicle, a vehicle-mounted device, or the like. For example, an access network device in a V2X technology may be a road side unit (road side unit, RSU). All or a part of functions of the RAN node in this application may alternatively be implemented by using a software function running on hardware, or may be implemented by using an instantiated virtualization function on a platform (for example, a cloud platform). Alternatively, the RAN node in this application may be a logical node, a logical module, or software that can implement all or a part of functions of the RAN node.

In another possible scenario, a plurality of RAN nodes coordinate to assist the terminal device in implementing wireless access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The RAN node may also be expressed differently, for example, a network device. In this application, unless otherwise specified, a network device is used for description below.

The terminal device may be a device having a wireless transceiver function, and may also be referred to as a terminal (terminal), user equipment (user equipment, UE), a mobile station, a mobile terminal device, or the like. The terminal device may be widely applied to various scenarios, such as D2D, V2X communication, machine-type communication (machine-type communication, MTC), IoT, virtual reality (virtual reality, VR), augmented reality (augmented reality, AR), industrial control (industrial control), self-driving (self-driving), remote medical (remote medical), smart grid (smart grid), smart furniture, smart office, smart wearable, smart transportation, and smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A device form of the terminal device is not limited in embodiments of this application.

For example, the network device interacts with any terminal device. In a possible design of the communication method provided in embodiments of this application, first indication information is transmitted between the network device and the terminal device. The first indication information indicates a plurality of non-consecutive OFDM symbols, the plurality of OFDM symbols are used by the terminal device to send an SRS signal to the network device, and the plurality of OFDM symbols correspond to a same SRS bandwidth and a same antenna port of the terminal device. Specific implementations and technical effects of this solution are described in detail in subsequent method embodiments. Details are not described herein again.

With reference to FIG. 2, the following describes in detail the communication method provided in embodiments of this application by using an example in which the network device interacts with any terminal device.

It should be noted that names of messages between network elements, names of parameters in the messages, or the like in the following embodiments of this application are merely examples, and there may be other names in a specific implementation. This is not specifically limited in embodiments of this application.

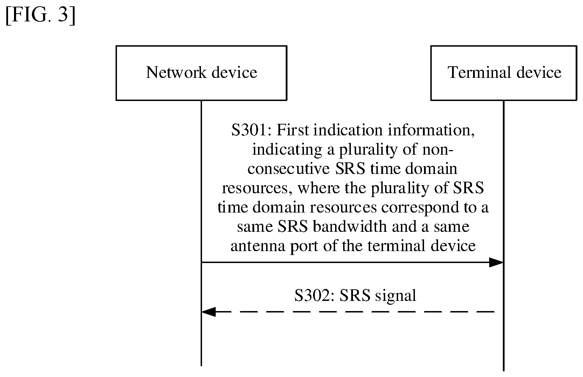

FIG. 3 shows a communication method according to an embodiment of this application. In FIG. 3, the method is described by using an example in which a network device and a terminal device are execution entities of the illustrative interaction. However, the execution entities of the illustrative interaction are not limited in this application. For example, the network device in FIG. 3 may alternatively be a module, for example, a chip, a chip system, or a processor, used in the network device, or may be a logical node, a logical module, or software that can implement all or a part of functions of a network device node. The terminal device in FIG. 3 may alternatively be a module, for example, a chip, a chip system, or a processor, used in the terminal device, or may be a logical node, a logical module, or software that can implement all or a part of functions of the terminal device.

Optionally, a quantity of radio frequency chains included in the network device may be less than a quantity of antenna ports. For example, the network device may adopt an HBF architecture. Alternatively, the network device may adopt another architecture. This is not limited in this embodiment of this application.

Optionally, the network device may include M radio frequency chains and N*M antenna ports. N may be any positive integer greater than 1. Each of the M radio frequency chains may be connected to a plurality of antennas.

As shown in FIG. 3, the communication method includes the following steps.

S301: The network device sends first indication information to the terminal device. The first indication information indicates a plurality of non-consecutive SRS time domain resources. The plurality of SRS time domain resources correspond to a same SRS bandwidth and a same antenna port of the terminal device. Correspondingly, the terminal device receives the first indication information from the network device.

It should be noted that FIG. 3 illustrates an example where a network device sends first indication information to a terminal device and the terminal device receives the first indication information. However, this embodiment of this application does not restrict whether a transmitter (or a receiver) of the first indication information is a terminal device or a network device. The terminal device may send the first indication information to the network device, and the network device may receive the first indication information, or the communication method provided in this embodiment of this application may be applied.

In this embodiment of this application, a unit of the SRS time domain resource may be an OFDM symbol (symbol), a mini-slot (mini slot), a slot (slot), or the like. This is not limited in this embodiment of this application.

In this embodiment of this application, the SRS time domain resource is used for SRS signal transmission. On a network device side, the SRS time domain resource is used to receive an SRS signal; on a terminal device side, the SRS time domain resource is used to send the SRS signal.

The statement that the plurality of SRS time domain resources correspond to the same SRS bandwidth may also be understood as that the plurality of SRS time domain resources correspond to a same SRS frequency domain resource.

The statement that the plurality of SRS time domain resources correspond to the same antenna port of the terminal device may be understood as follows: One antenna port of the terminal device may correspond to a plurality of SRS time domain resources, and the plurality of SRS time domain resources corresponding to the one antenna port of the terminal device may be either all or a subset of the plurality of SRS time domain resources indicated by the first indication information.

According to the communication method provided in this embodiment of this application, a plurality of non-consecutive SRS time domain resources may be configured to send an SRS signal. This is more flexible than existing solutions that allow only configuration of a plurality of consecutive OFDM symbols for sending an SRS signal.

In addition, based on the foregoing descriptions of the SRS, the network device may measure a channel using the received SRS to obtain channel state information. When the network device adopts an M-drive N*M architecture, such as the HBF architecture described above, receiving a single SRS signal enables the M radio frequency chains to provide M channel soundings (or referred to as channel measurements). Consequently, if the network device includes N*M antenna ports and aims to obtain complete antenna port-level channel state information (or referred to as full channel state information) via the M chains, in a conventional SRS signal sending and receiving method, the terminal device needs to send the SRS N times with the network device correspondingly performing beam scanning N times. However, this multiplies SRS overhead by N times and similarly increases measurement delay by N times, greatly increasing channel obtaining overhead and compromising accuracy of channel obtaining.

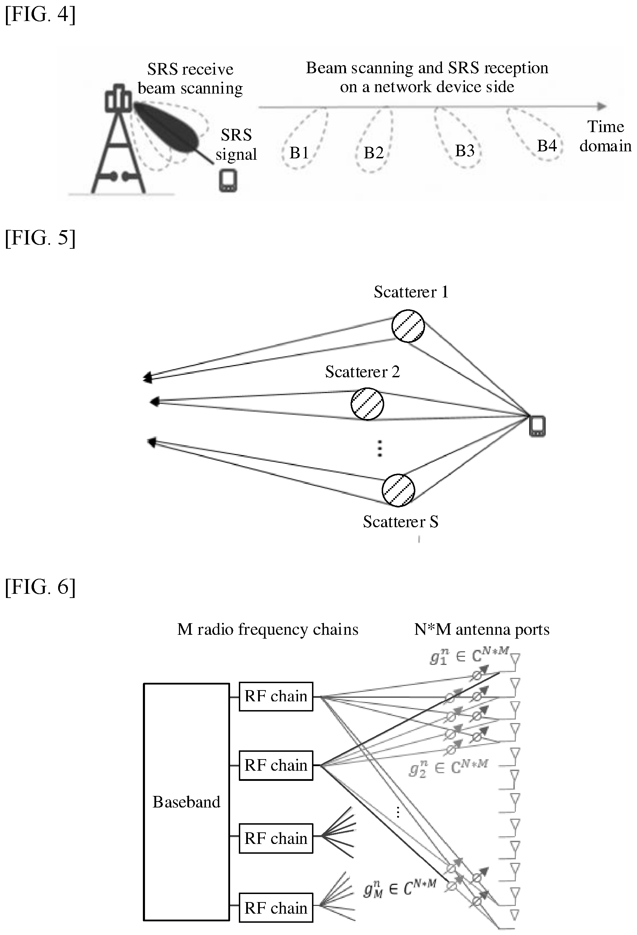

For example, FIG. 4 is a diagram of a conventional SRS signal sending and receiving method. As shown in FIG. 4, when the terminal device sends an SRS signal to the network device, the network device needs to scan a receive beam to receive the SRS signal. If the terminal device sends the SRS signal to the network device four times, the network device needs to perform four receive beam scans (B1 to B4 shown in FIG. 4) accordingly, resulting in a four-fold measurement delay.

Based on this, in this embodiment of this application, a compressive sensing theory may be further applied to SRS signal configuration, allowing the network device to obtain the full channel state information from a small quantity of measurement values. In other words, compared with the conventional SRS signal sending and receiving method, the communication method provided in this embodiment of this application enables the network device to reduce a quantity of SRS signal receptions while still obtaining the full channel state information. The following describes a principle that the network device can reduce the quantity of SRS signal receptions based on the compressive sensing theory.

In real-world environments, signals transmitted in space encounter scatterers along their path. In communication, a specific space may be referred to as a spatial domain. Therefore, when the terminal device sends the SRS signal to the network device, the SRS signal can be viewed as traversing through the scatterers in the spatial domain along its path. It may be understood that when the spatial domain is relatively sparse (or exhibits strong spatial sparsity), there are many scatterers. When the spatial domain is less sparse (or exhibits weak spatial sparsity), there are few scatterers.

For example, it is assumed that a quantity of scatterers in the spatial domain between the terminal device and the network device is denoted as S. As shown in FIG. 5, a signal sent by the terminal device is scattered by S scatterers, resulting in S beams (beam) that propagate towards the network device.

For a network device adopting an M-drive N*M architecture, when the network device receives a single SRS transmission, the M radio frequency chains serve as M channels, providing M measurements on a channel (that is, a channel between the terminal device and the network device). With reference to FIG. 5, if the terminal device in FIG. 5 sends an SRS signal, each transmission allows the network device to obtain, via the M radio frequency chains, M measurements on the S beams.

Further, if the network device receives N SRS transmissions, the M radio frequency chains may provide N*M channel measurements. In a mathematical form, the N*M channel measurements correspond to N*M sensing vectors in total. Specifically, when the network device receives the $n^{th}$ SRS transmission, a sensing vector corresponding to a measurement provided by an $m^{th}$ radio frequency chain on the channel may be denoted as $g_m^n$, $g_m^n \in C^{N*M}$, where C represents a complex number set.

For example, as shown in FIG. 6, the network device includes the M radio frequency chains and the N*M antenna ports. When the network device receives the $n^{th}$ SRS signal sent by the terminal device, a sensing vector corresponding to a measurement provided by a $1^{st}$ radio frequency chain on the channel is denoted as $g_1^n$, a sensing vector corresponding to a measurement provided by a $2^{nd}$ radio frequency chain on the channel is denoted as $g_2^n$, and so forth. A sensing vector corresponding to a measurement provided by a last radio frequency chain, namely, an $M^{th}$ radio frequency chain, on the channel is denoted as $g_M^n$. If the terminal device sends a total of N SRS signals, $g_1^n$, $g_2^n$,...., and $g_M^n \in C^{N*M}$.

For the network device adopting the M-drive N*M architecture, it is assumed that the quantity of scatterers in the spatial domain between the terminal device and the network device is S. Based on a compressive sensing principle, if the terminal device sends the SRS K times and the condition K*M > 2S is met, the network device may recover the full channel information by utilizing compressive sensing. It may be understood that, since K may be any value that meets K*M > 2S, in some cases (for example, when S is relatively small), K may be less than N. In such cases, the terminal device only needs to send the SRS signal on K out of the N SRS time domain resources, and the network device may recover the full channel state information by utilizing compressive sensing. Therefore, compared with existing SRS signal configuration methods, the proposed solution uses spatial sparsity characteristics of the channel to reduce SRS resource overhead.

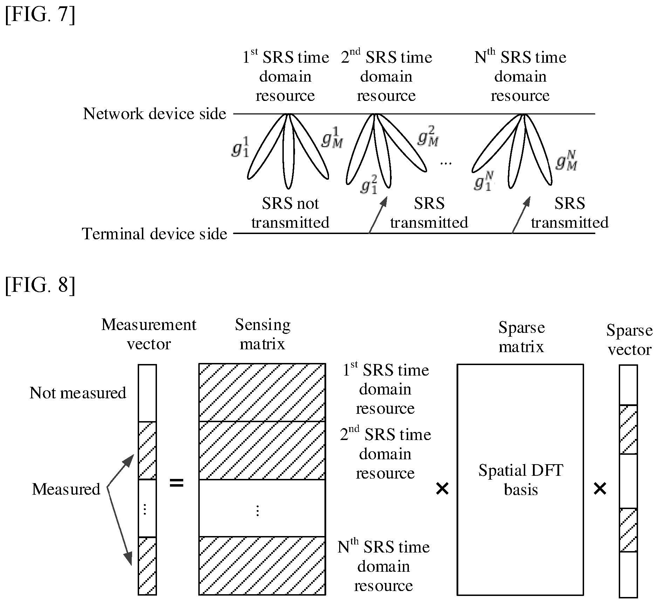

For example, FIG. 7 is a diagram of sending an SRS signal by a terminal device on an SRS time domain resource. As shown in FIG. 7, there are N SRS time domain resources. If the terminal device sends the SRS signal on a $1^{st}$ SRS time domain resource, a corresponding sensing vector on the network device side is $g_1^1$ to $g_M^1$ (in FIG. 7, the terminal device does not send the SRS signal on the $1^{st}$ SRS time domain resource). If the terminal device sends the SRS signal on a $2^{nd}$ SRS time domain resource, a corresponding sensing vector on the network device side is $g_1^2$ to $g_M^2$. Similarly, if the terminal device sends the SRS signal on an $N^{th}$ SRS time domain resource, a corresponding sensing vector on the network device side is $g_1^N$ to $g_M^N$.

For example, FIG. 8 is a schematic representation of applying a compressive sensing principle to channel measurement mathematically. As shown in FIG. 8, it is assumed that the terminal device sends the SRS signal on the K out of the N SRS time domain resources, the network device receives the SRS signal on the K SRS time domain resources and performs channel measurements, yielding a measurement vector. In a mathematical form, the measurement vector may meet the following relationship: measurement vector = sensing matrix × sparse matrix × sparse vector.

Sparse matrix × sparse vector is a sparse representation of the SRS signal. The sparse matrix may represent spatial domain dimension information of the channel between the terminal device and the network device. For example, as shown in FIG. 8, the sparse matrix may be constructed from discrete fourier transform (discrete fourier transform, DFT) basis vectors. The sensing matrix is composed of sensing vectors. It may be understood that, if the terminal device sends the SRS signal on a specific SRS time domain resource, the sensing matrix includes a sensing vector corresponding to this measurement. For example, if the terminal device does not send the SRS signal on the 1st SRS time domain resource, the sensing matrix does not include the sensing vector $g_1^1$ to $g_M^1$; if the terminal device sends the SRS signal on the 2nd SRS time domain resource, the sensing matrix includes the sensing vector $g_1^2$ to $g_M^2$. Consequently, if the terminal device sends the SRS signal on the K SRS time domain resources, the sensing matrix includes K*M sensing vectors in total. Based on the known measurement vector and sensing matrix, the network device can solve for the sparse vector and subsequently recover the original SRS signal.

Optionally, the following further describes in detail, with reference to the compressive sensing principle, the plurality of SRS time domain resources indicated by the first indication information in S301.

Optionally, a quantity and/or positions of the plurality of SRS time domain resources may be determined based on spatial sparsity characteristics of the channel between the terminal device and the network device.

Optionally, a quantity and/or positions of the plurality of SRS time domain resources may be determined based on an uplink channel between the terminal device and the network device. Alternatively, when spatial sparsity characteristics of a downlink channel and an uplink channel between the terminal device and the network device are the same, a quantity and/or positions of the plurality of SRS time domain resources may be determined based on spatial sparsity characteristics of the downlink channel.

Optionally, a quantity and/or positions of the plurality of SRS time domain resources indicated by the first indication information may be determined based on the full channel state information. In other words, before the first indication information is transmitted, the network device or the terminal device may first determine the full channel state information, and then determine the first indication information based on the full channel state information.

For example, it is assumed that the network device includes the N*M antenna ports. The network device may first configure the N SRS time domain resources. After receiving the SRS signal on the N SRS time domain resources and determining the full channel state information based on the received SRS signal, the network device may determine the first indication information based on the full channel state information.

For another example, the network device may first send a channel state information-reference signal (channel state information-reference signal, CSI-RS) to the terminal device. After determining the full channel state information based on the received CSI-RS, the terminal device determines the first indication information based on the full channel state information.

For ease of understanding, the following describes a specific implementation of determining the quantity of the plurality of SRS time domain resources based on the spatial sparsity characteristics of the channel by using an example in which the quantity of the plurality of SRS time domain resources indicated by the first indication information is denoted as K.

For determining the quantity of the plurality of SRS time domain resources, that is, a value of K, based on the spatial sparsity characteristics of the channel between the terminal device and the network device, in a possible implementation, the value of K may be determined based on sparsity of a spatial domain in which the channel between the terminal device and the network device is located. When the spatial domain is relatively sparse, K may be set to a small value. When the spatial domain is less sparse, K may be set to a large value.

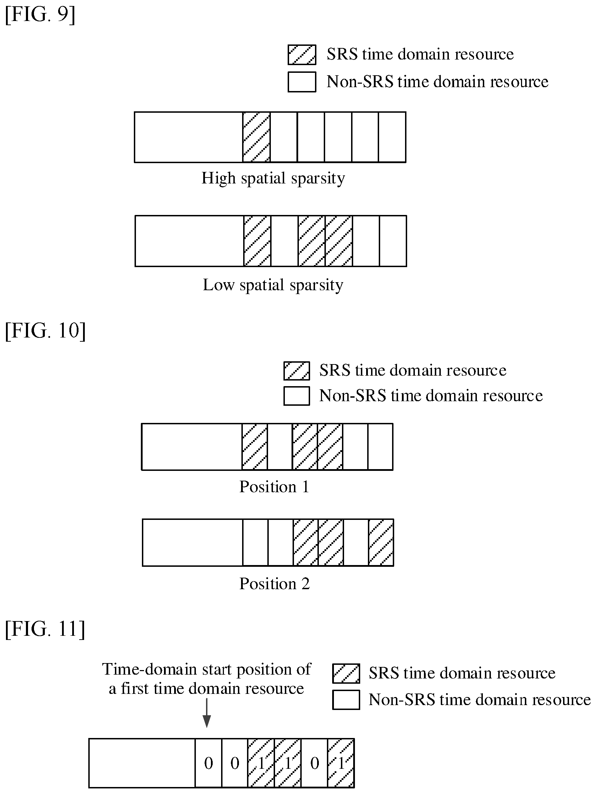

For example, as shown in FIG. 9, when the sparsity of the spatial domain is high, K may be set to a small value, so that the network device can recover the original signal after receiving the SRS. For example, K may be set to 1. When the sparsity of the spatial domain is low, K may be set to a large value, to improve a channel estimation capability. For example, K may be set to 3.

Optionally, the sparsity of the spatial domain may be determined by estimating a quantity of scatterers in an environment. A smaller quantity of scatterers indicates a sparser spatial domain. For example, when the terminal device and the network device are located in a plain, there are a small quantity of scatterers in the environment, and the spatial domain is relatively sparse. When the terminal device and the network device are located in a city, there are a large quantity of scatterers in the environment, and the spatial domain is less sparse.

Optionally, when the network device includes the M radio frequency chains, the value of K may meet K*M > 2S. S is the quantity of scatterers in the space in which the channel between the terminal device and the network device is located, and a value of S may be estimated.

Optionally, when the network device includes the M radio frequency chains and the N*M antenna ports, K may be set to a value less than N.

For determining positions of the K SRS time domain resources based on the spatial sparsity characteristics of the channel between the terminal device and the network device, for example, the spatial domain of the channel between the terminal device and the network device may be divided into a plurality of spatial domain units. The network device may map a complete channel to some of the plurality of spatial domain units based on the full channel state information, determine the value of K based on a quantity of the spatial domain units to which the channel is mapped, and determine the positions of the K SRS time domain resources based on the specific spatial domain units to which the channel is mapped. From a mathematical perspective, one spatial domain unit may correspond to one DFT base or one Kronecker product. From a physical perspective, one spatial domain unit may correspond to one beam direction on the network device side.

For example, it is assumed that the network device determines that the value of K is 3. FIG. 10 shows two possible cases of positions of three SRS time domain resources. The network device may determine, based on the spatial sparsity characteristics, to use a position indicated in a specific case.

It can be learned that, according to the communication method provided in this embodiment of this application, the quantity and/or positions of the K SRS time domain resources may be flexibly configured based on the spatial sparsity characteristics, thereby reducing resource overhead while improving quality of obtained channel state information and system transmission performance (for example, a system throughput).

Alternatively, the plurality of SRS time domain resources may be determined in any other manner. A manner of determining the plurality of SRS time domain resources is not specifically limited in this embodiment of this application.

After determining the plurality of SRS time domain resources, the network device or the terminal device may generate the first indication information, and indicate the plurality of SRS time domain resources based on the first indication information. In addition, the plurality of SRS time domain resources are nonconsecutive in time domain.

It should be noted that a manner in which the first indication information indicates the plurality of SRS time domain resources is not limited in this embodiment of this application. The following describes a possible manner in which the first indication information indicates the plurality of SRS time domain resources provided in this embodiment of this application.

In a possible implementation, the first indication information indicates a time-domain start position of a first time domain resource and positions of the plurality of SRS time domain resources in the first time domain resource.

Optionally, the time-domain start position of the first time domain resource may be a time domain position of a 1st SRS time domain resource in the plurality of SRS time domain resources. Alternatively, the time-domain start position of the first time domain resource may be before the time domain position of the 1st SRS time domain resource in the plurality of SRS time domain resources.

Optionally, the first indication information may indicate the time-domain start position of the first time domain resource by indicating a position of a time unit in which the time-domain start position of the first time domain resource is located relative to another time unit. For example, the time-domain start position indicated by the first indication information may include a position of a symbol in a slot and/or a position of a slot in a frame (a system frame or a subframe).

Optionally, the first indication information may indicate the time-domain start position of the first time domain resource by indicating an index (index) of a time domain resource in which the time-domain start position of the first time domain resource is located. For example, it is assumed that the time-domain start position of the first time domain resource is located in a 4th symbol in the slot. In this case, the first indication information may indicate, by indicating an index of the 4th symbol in the slot, that the time-domain start position of the first time domain resource is located in the 4th symbol in the slot.

Optionally, the time-domain start position of the first time domain resource may be indicated by at least one bit.

Optionally, the positions of the plurality of SRS time domain resources in the first time domain resource may be indicated by at least one bit value. In a possible implementation, the first time domain resource may include at least one sub-time domain resource, and in a bit that is included in the first indication information and that indicates positions of the plurality of SRS time domain resources in the first time domain resource, each bit corresponds to each sub-time domain resource included in a first time-frequency resource, and a value of the bit (namely, a bit value) indicates whether a corresponding sub-time domain resource is an SRS time domain resource. In other words, the first indication information may indicate, via the at least one bit value, specific time domain resources in the first time domain resource that are SRS time domain resources, that is, indicate the positions of the plurality of time domain resources in the first time domain resource.

In another possible implementation, in a bit that is included in the first indication information and that indicates the positions of the plurality of SRS time domain resources in the first time domain resource, each bit corresponds to each sub-time domain resource in some sub-time domain resources included in the first time-frequency resource, and a bit value indicates whether a corresponding sub-time domain resource is an SRS time domain resource. In this implementation, a specific sub-time domain resource or specific sub-time domain resources included in the first time domain resource do not correspond to the bit that is included in the first indication information and that indicates the positions of the plurality of SRS time domain resources in the first time domain resource may be preset. Whether a sub-time domain resource that does not correspond to the bit is an SRS time domain resource may also be preset (that is, does not need to be indicated by the first indication information).

For example, it may be predefined that first x (x is a positive integer) sub-time domain resources in the first time domain resource are SRS time domain resources. It is assumed that x is 2, and the first indication information indicates that the time-domain start position of the first time domain resource is a 2nd symbol in the slot. In this case, it may be determined that the 2nd symbol and a 3rd symbol in the slot are SRS time domain resources. The bit that is included in the first indication information and that indicates the positions of the plurality of SRS time domain resources in the first time domain resource may indicate whether one or more symbols after the 3rd symbol in the slot are SRS time domain resources.

A correspondence between a bit value and a sub-time domain resource may be preset.

In this embodiment of this application, "preset" may also be understood as "predefined", "preconfigured", "set in advance", "defined in a protocol", or "pre-agreed (for example, pre-agreed by the terminal device and the network device)". This is uniformly described herein. Similar expressions in the following may also be understood in this way.

For example, the first indication information may include a bitmap (bitmap), where each bit included in the bitmap represents a symbol in the first time domain resource. When a value of the bit is 1, it indicates that a symbol corresponding to the bit is an SRS time domain resource. When a value of the bit is 0, it indicates that a symbol corresponding to the bit is not an SRS time domain resource. In this way, the positions of the plurality of SRS time domain resources in the first time domain resource are indicated.

Optionally, if the network device includes the M radio frequency chains and the N*M antenna ports, a quantity of bits in the first indication information that indicate the positions of the plurality of time domain resources in the first time domain resource may be N.

Alternatively, if the first time domain resource includes L sub-time domain resources (for example, includes L OFDM symbols), a quantity of bits in the first indication information that indicate the positions of the plurality of time domain resources in the first time domain resource may be L-1. In this case, it may be considered by default that a 1st sub-time domain resource in the first time domain resource is an SRS time domain resource (that is, the time-domain start position of the first time domain resource is a time domain position of a 1st SRS time domain resource in the plurality of SRS time domain resources). For example, the first time domain resource includes four OFDM symbols: an OFDM symbol 1 to an OFDM symbol 4. The OFDM symbol 1 is the 1st SRS time domain resource by default. In this case, positions of SRS time domain resources after the 1st SRS time domain resource may be indicated by values of three bits.

Optionally, a bit that is included in the first indication information and that indicates the time-domain start position of the first time domain resource may be independent of the bit that is included in the first indication information and that indicates the positions of the plurality of SRS time domain resources in the first time domain resource.

Optionally, the first indication information may further include a bit indicating the quantity of the plurality of SRS time domain resources. In this optional solution, the bit indicating the quantity of the plurality of SRS time domain resources may be independent of the bit indicating the positions of the plurality of SRS time domain resources in the first time domain resource. For example, in the first indication information, first n (n is a positive integer) bits indicate the time-domain start position of the first time domain resource, m (m is a positive integer) bits after the first n bits indicate the quantity of the plurality of SRS time domain resources, and a bitmap is after first n+m bits. A bit value of the bitmap indicates the positions of the plurality of SRS time domain resources in the first time domain resource.

With reference to examples, the following describes how the first indication information indicates the time-domain start position of the first time domain resource and the positions of the plurality of time domain resources in the first time domain resource in this implementation.

Example 1: As shown in FIG. 11, it is assumed that the first indication information indicates that the time-domain start position of the first time domain resource is a position of a 4th symbol in the slot. In other words, a 1st symbol in the first time domain resource is the 4th symbol in the slot. In addition, the first indication information further includes a bitmap, and each bit in the bitmap corresponds to, in a time domain order, each symbol included in the first time domain resource. When a bit in the bitmap is set to 1, it indicates that a corresponding symbol is an SRS time domain resource, that is, the symbol is used to send an SRS signal. When the bit is set to 0, it indicates that a corresponding symbol is not an SRS time domain resource, that is, the symbol is not used to send an SRS signal. It is assumed that a length of the bitmap is 6, and a value of the bitmap is 001101. This indicates that the 1st symbol and a 2nd symbol in the first time domain resource are not SRS time domain resources, a 3rd symbol and a 4th symbol are SRS time domain resources, a 5th symbol is not an SRS time domain resource, and a 6th symbol is an SRS time domain resource. In this example, the time-domain start position of the first time domain resource is before the 1st SRS time domain resource, and the first indication information indicates the time-domain start position of the first time domain resource and the positions of the plurality of SRS time domain resources in the first time domain resource.

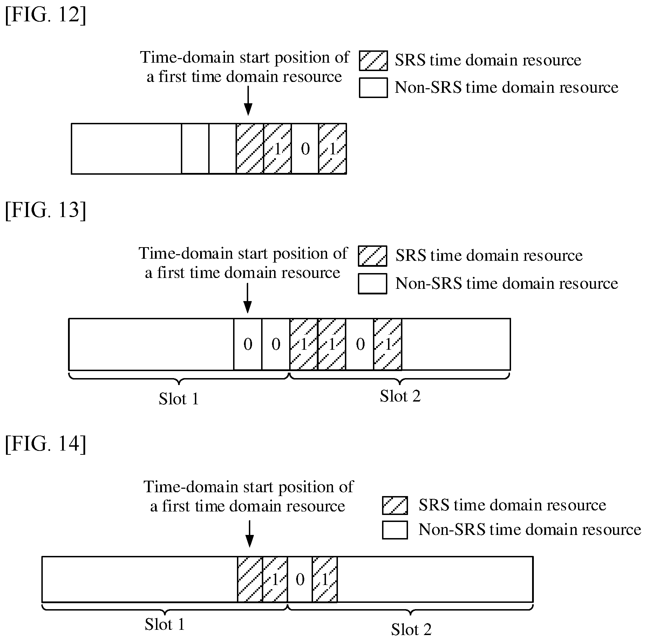

Example 2: As shown in FIG. 12, it is assumed that the first indication information indicates that a time-domain start position of the 1st SRS time domain resource is a position of a 6th symbol in the slot. In other words, the 1st SRS time domain resource is the 6th symbol in the slot, and is also a 1st symbol in the first time domain resource. In addition, the first indication information further includes a bitmap, and each bit in the bitmap corresponds to, in a time domain order, a symbol other than the 1st symbol in the first time domain resource (the 1st symbol is an SRS time domain resource by default, and may be used to send an SRS signal). When a bit in the bitmap is set to 1, it indicates that a corresponding symbol is an SRS time domain resource, that is, the symbol is used to send an SRS signal. When the bit is set to 0, it indicates that a corresponding symbol is not an SRS time domain resource, that is, the symbol is not used to send an SRS signal. It is assumed that a length of the bitmap is 3, and a value of the bitmap is 101. This indicates that a 2nd symbol in the first time domain resource is an SRS time domain resource, a 3rd symbol is not an SRS time domain resource, and a 4th symbol is an SRS time domain resource. In this example, the time-domain start position of the first time domain resource is a time domain position of the 1st SRS time domain resource, and the first indication information indicates the time-domain start position of the first time domain resource and the positions of the plurality of SRS time domain resources in the first time domain resource.

In another possible implementation, the first indication information may indicate the positions of the plurality of SRS time domain resources in the first time domain resource, and a position of the first time domain resource may be preset. For example, it may be preconfigured that the first time domain resource is last six symbols in the slot. In other words, in this implementation, the time-domain start position of the first time domain resource does not need to be indicated.

In this implementation, for an implementation in which the first indication information indicates the positions of the K SRS time domain resources in the first time domain resource, refer to the foregoing descriptions. For example, the positions may be indicated by at least one bit value.

In another possible implementation, the first indication information may indicate a position of the 1st SRS time domain resource and the quantity of SRS time domain resources (that is, the value of K). In this implementation, the plurality of SRS time domain resources may be arranged at a specific interval, and the interval may be preset, or may be indicated by indication information (for example, the first indication information).

For example, the first indication information indicates that the 1st SRS time domain resource is the 4th symbol in the slot, and indicates that there are four SRS time domain resources. If it is predefined that an interval between two adjacent SRS time domain resources in the four SRS time domain resources is one symbol, the four SRS time domain resources indicated by the first indication information are the 4th symbol, the 6th symbol, an 8th symbol, and a 10th symbol in the slot.

Optionally, in this embodiment of this application, the first time domain resource may be located in a same slot, or may be located in a plurality of adjacent slots. In other words, the first time domain resource may be indicated across slots.

To meet a requirement of a communication system or a service, the network device may include a large quantity of antenna ports. In this case, to obtain the full channel state information, the network device needs to receive the SRS signal a large quantity of times, that is, a large quantity of SRS time domain resources are required. In this case, to meet a requirement of the network side, the first time domain resource may be indicated across slots, for configuration of the large quantity of SRS time domain resources.

For example, as shown in FIG. 13, it is assumed that the first indication information indicates that the time-domain start position of the first time domain resource is a position of a 9th symbol in a slot 1 (that is, the 1st symbol in the first time domain resource is the 9th symbol in the slot 1), the first indication information includes a bitmap, a length of the bitmap is 6, and a value of the bitmap is 001101. This indicates that the 1st symbol and the 2nd symbol in the first time domain resource are not SRS time domain resources, the 3rd symbol and the 4th symbol are SRS time domain resources, the 5th symbol is not an SRS time domain resource, and the 6th symbol is an SRS time domain resource. As shown in FIG. 13, the 1st symbol and the 2nd symbol in the first time domain resource are in the slot 1, and the 3rd symbol to the 6th symbol are in a slot 2.

Optionally, in this embodiment of this application, the plurality of SRS time domain resources may be located in a same slot. Alternatively, the plurality of SRS time domain resources may be located in the plurality of adjacent slots.

For example, as shown in FIG. 14, it is assumed that the first indication information indicates that the 1st SRS time domain resource is the 9th symbol in the slot 1, and is also the 1st symbol in the first time domain resource. In addition, the first indication information further includes a bitmap, a length of the bitmap is 4, and a value of the bitmap is 101. This indicates that the 2nd symbol in the first time domain resource is an SRS time domain resource, the 3rd symbol is not an SRS time domain resource, and the 4th symbol is an SRS time domain resource. As shown in FIG. 14, the 1st and 2nd SRS time domain resources are in the slot 1, and a 3rd SRS time domain resource is in the slot 2.

Optionally, after S301, the method may further include the following steps.

S302: The terminal device sends the SRS signal to the network device on the plurality of SRS time domain resources. Correspondingly, the network device receives the SRS signal from the terminal device on the plurality of SRS time domain resources.

Further, after receiving the SRS, the network device may determine the channel state information based on the SRS signal.

For example, the network device may measure the SRS signal, and determine channel state information of the uplink channel. For another example, in a TDD system, the network device may determine, by utilizing channel reciprocity, channel state information of the downlink channel by measuring the SRS signal.

Optionally, after S301, the method may further include the following steps.

S303: The network device sends second indication information to the terminal device. The second indication information is used to update SRS time domain resource configuration information (which may also be understood as that the second indication information is used to update SRS time domain resource configuration or the SRS time domain resource). Correspondingly, the terminal device receives the second indication information from the network device.

The SRS time domain resource configuration information before update may be the first indication information. In other words, the SRS time domain resource before update may be the plurality of SRS time domain resources indicated by the first indication information.

Optionally, the second indication information may indicate to delete at least one of the plurality of SRS time domain resources (the SRS time domain resource that is indicated by the second indication information to be deleted is referred to as the first time domain resource below). Alternatively, the second indication information indicates to add at least one SRS time domain resource.

The terminal device may delete or add a corresponding SRS time domain resource based on the second indication information, to determine an SRS time domain resource after update (or referred to as an SRS time domain resource after adjustment). It may be understood that, after the first SRS time domain resource is deleted, the first SRS time domain resource is not used for transmitting the SRS. After the at least one SRS time domain resource is added, the added SRS time domain resource may be used for transmitting the SRS.

Therefore, in this solution, the SRS time domain resource may be dynamically added or deleted based on a current requirement, to improve obtained channel quality or reduce SRS resource overhead. For example, when it is determined that the current quantity of SRS time domain resources is insufficient to recover the full channel state information and a sounding amount needs to be increased, an SRS time domain resource may be added. When it is determined that the current quantity of SRS time domain resources is sufficient to recover the full channel state information and a sounding amount can be reduced, an SRS time domain resource may be deleted.

Optionally, S303 may occur after S302. In this case, after sending the second indication information, the network device may receive the SRS from the terminal device again on the SRS time domain resource after update.

Alternatively, S303 occurs before the network device receives the SRS on the SRS time domain resource. In this case, S302 is replaced with: The network device receives the SRS from the terminal device on the SRS time domain resource after update.

In S303, if the second indication information indicates to delete the first SRS time domain resource in the plurality of SRS time domain resources, a position of the first SRS time domain resource may be preset.

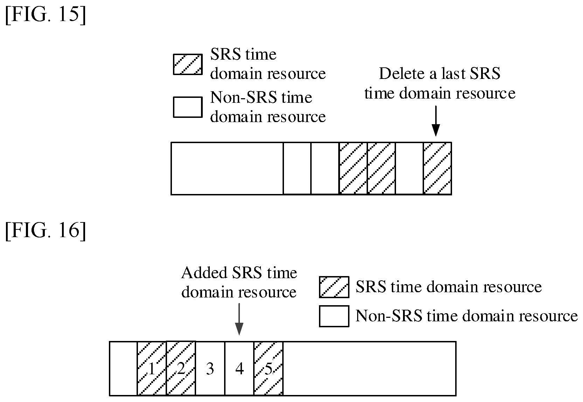

For example, it is assumed that the positions of the plurality of time domain resources in the slot are shown in FIG. 15. The terminal device and the network device may agree in advance that the first SRS time domain resource is a last SRS time domain resource in the plurality of time domain resources.

Alternatively, the position of the first SRS time domain resource may be indicated by the second indication information. An implementation in which the second indication information indicates the position of the first SRS time domain resource is not limited in this embodiment of this application.

In S303, if the second indication information indicates to add the at least one SRS time domain resource, a position of the at least one added SRS time domain resource may be preset.

For example, the terminal device and the network device may agree in advance to add one SRS time domain resource after the last SRS time domain resource in the plurality of time domain resources, and the added SRS time domain resource is consecutive to a last SRS time domain resource in K time domain resources in time domain.

Alternatively, the position of the at least one added SRS time domain resource may be indicated by the second indication information. An implementation in which the second indication information indicates the position of the first SRS time domain resource is not limited in this embodiment of this application.

The following describes possible implementations in which the second indication information indicates the position of the first SRS time domain resource or the position of the at least one added SRS time domain resource according to embodiments of this application.

In a possible implementation, the second indication information may indicate an index of the first SRS time domain resource, to indicate the position of the first SRS time domain resource. Alternatively, the second indication information may indicate an index of the at least one added SRS time domain resource, to indicate the position of the at least one added SRS time domain resource.

For example, as shown in FIG. 16, it is assumed that the plurality of SRS time domain resources are symbols whose indexes are 1, 2, and 5 in the slot. The second indication information may indicate that the index of the added SRS time domain resource is 4. The terminal device may determine, based on the second indication information, that the symbol whose index is 4 is the added SRS symbol.

In another possible implementation, the second indication information may indicate the SRS time domain resource after update via the at least one bit value. In this implementation, the second indication information may include at least one bit, and each bit may correspond to each of the plurality of SRS time domain resources. Alternatively, each bit may correspond to each sub-time-frequency resource included in a first time-frequency resource indicated by the first indication information. A bit value of each bit may indicate whether a corresponding time-frequency resource after update is an SRS time domain resource. In this implementation, the second indication information may also be understood as being used to update the first indication information.

For example, based on the example shown in FIG. 11, the second indication information may include a bitmap, a length of the bitmap is 6, and a value of the bitmap is 101101. In comparison with the value 001101 of the bitmap included in the first indication information, a value of a 1st bit in the bitmap included in the second indication information is different from a value of a 1st bit in the bitmap included in the first indication information. In the bitmap included in the first indication information, the 1st bit indicates that the 1st symbol in the first time domain resource is not an SRS time domain resource, and in the bitmap included in the second indication information, the 1st bit indicates that the 1st symbol in the first time domain resource is an SRS time domain resource. Therefore, the terminal device may update the 1st symbol in the first time domain resource to the SRS time domain resource based on the second indication information, that is, one SRS time domain resource is added.

For another example, based on the example shown in FIG. 12, the second indication information may include a bitmap, a length of the bitmap is 3, and a value of the bitmap is 100. In comparison with the value 101 of the bitmap included in the first indication information, a value of a 3rd bit in the bitmap included in the second indication information is different from a value of a 3rd bit in the bitmap included in the first indication information. In the bitmap included in the first indication information, the 3rd bit indicates that the 4th symbol in the first time domain resource is an SRS time domain resource, and in the bitmap included in the second indication information, the 3rd bit indicates that the 4th symbol in the first time domain resource is not an SRS time domain resource. Therefore, the terminal device may update, based on the second indication information, the 4th symbol in the first time domain resource to be a non-SRS time domain resource, that is, one SRS time domain resource is deleted from the plurality of SRS time domain resources.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the network device in the foregoing method embodiment, an apparatus including the network device, or a component that can be used in the network device. Alternatively, the communication apparatus may be the terminal device in the foregoing method embodiment, an apparatus including the terminal device, or a component that can be used in the terminal device. It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of software functional module. It should be understood that module division in embodiments of this application is an example, and is merely a logical function division. In practice, another division manner may be used.

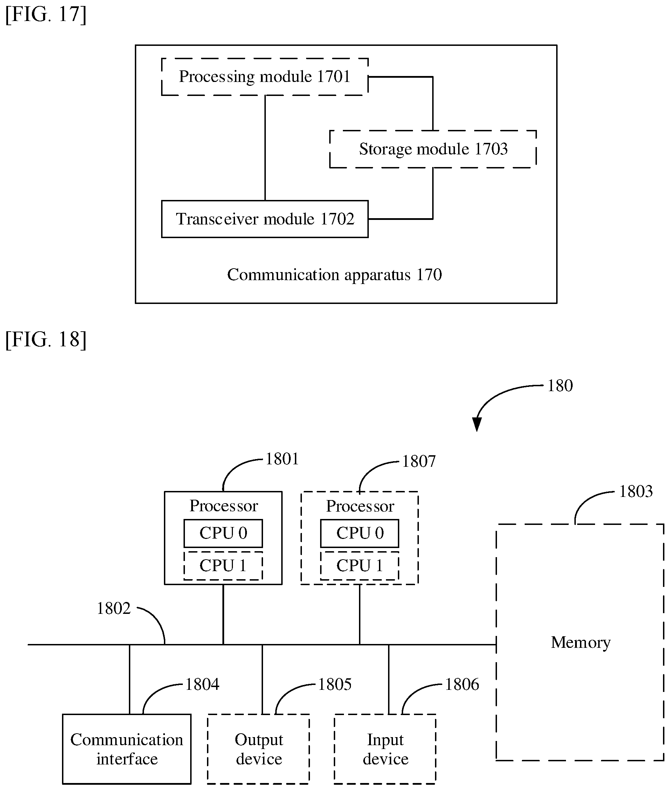

FIG. 17 is a diagram of a structure of a communication apparatus 170. The communication apparatus 170 includes a transceiver module 1702. Optionally, the communication apparatus 170 may further include a processing module 1701. Optionally, the communication apparatus 170 may further include a storage module 1703. The transceiver module 1702 may also be referred to as a transceiver unit, and is configured to implement a transceiver function, for example, may be a transceiver circuit, a transceiver machine, a transceiver, or a communication interface.

For example, the communication apparatus 170 is the network device in the foregoing embodiments. In a possible implementation,

the processing module 1701 is configured to determine first indication information; and the transceiver module 1702 is configured to transmit the first indication information, where the first indication information indicates a plurality of non-consecutive OFDM symbols, the plurality of OFDM symbols are used by a terminal device to send an SRS signal to a network device, and the plurality of OFDM symbols correspond to a same SRS bandwidth and a same antenna port of the terminal device.

Optionally, the transceiver module 1702 is further configured to receive the SRS signal on the plurality of OFDM symbols; and the processing module 1701 is further configured to determine channel state information based on the SRS signal.

Optionally, the transceiver module 1702 is further configured to send second indication information, where the second indication information indicates to delete a first OFDM symbol from the plurality of OFDM symbols; or the second indication information indicates to add at least one OFDM symbol used for SRS transmission.

All related content of the steps in the foregoing method embodiments may be cited in function descriptions of the corresponding functional modules. Details are not described herein again.

Optionally, the module in FIG. 17 may also be referred to as a unit. For example, the processing module may be referred to as a processing unit, and the transceiver module may be referred to as a transceiver unit. In addition, in the embodiment shown in FIG. 17, names of the units may not be names shown in the figure. For example, the transceiver module may also be referred to as a communication module or a communication unit.

When each unit in FIG. 17 is implemented in a form of software functional module and sold or used as an independent product, the integrated unit may be stored in a computer-readable storage medium. The computer software product may be stored in a storage medium, and includes several instructions for instructing a computer device (which may be a personal computer, a server, or a network device) or a processor (processor) to perform all or a part of the steps of the methods in embodiments of this application. The storage medium that stores the computer software product includes any medium that can store program code, such as a USB flash drive, a removable hard disk, a read-only memory (read-only memory, ROM), a random access memory (random access memory, RAM), a magnetic disk, or an optical disc.

In this embodiment of this application, the communication apparatus 170 is presented in a form of functional modules obtained through division in an integrated manner. The module herein may be an ASIC, a circuit, a processor that executes one or more software or firmware programs, a memory, an integrated logic circuit, and/or another component capable of providing the foregoing functions. In a simple embodiment, a person skilled in the art may figure out that the communication apparatus 170 may be in a form of the communication apparatus shown in FIG. 18.

As shown in FIG. 18, the communication apparatus 180 includes one or more processors 1801, a communication line 1802, and at least one communication interface (in FIG. 18, an example in which a communication interface 1804 and one processor 1801 are included is merely used for description). Optionally, the communication apparatus 180 may further include a memory 1803.

The processor 1801 may be a general-purpose central processing unit (central processing unit, CPU), a microprocessor, an application-specific integrated circuit (application-specific integrated circuit, ASIC), or one or more integrated circuits configured to control execution of programs in solutions in this application.

The communication line 1802 may include a path for connecting different components.

The communication interface 1804 may be a transceiver module, configured to communicate with another device or a communication network like the Ethernet, a RAN, a terminal, or a wireless local area network (wireless local area networks, WLAN). For example, the transceiver module may be an apparatus like a transceiver or a transceiver machine. Optionally, the communication interface 1804 may alternatively be a transceiver circuit or an input/output interface located in the processor 1801, and is configured to implement signal input and signal output of the processor.

The memory 1803 may be an apparatus having a storage function. For example, the memory 1803 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of instruction or a data structure and that can be accessed by a computer. However, the memory is not limited thereto. The memory may exist independently and is connected to the processor through the communication line 1802. The memory may alternatively be integrated with the processor.

The memory 1803 is configured to store computer-executable instructions for executing the solutions of this application, and the processor 1801 controls execution. The processor 1801 is configured to execute the computer-executable instructions stored in the memory 1803, to implement a communication method provided in embodiments of this application.

Alternatively, optionally, in this embodiment of this application, the processor 1801 may perform processing-related functions in the communication method provided in the following embodiments of this application, and the communication interface 1804 is responsible for communication with another device or a communication network. This is not specifically limited in this embodiment of this application.

Optionally, the computer-executable instructions in embodiments of this application may also be referred to as application code. This is not specifically limited in embodiments of this application.

During specific implementation, in an embodiment, the processor 1801 may include one or more CPUs, for example, a CPU 0 and a CPU 1 in FIG. 18.

In a specific implementation, in an embodiment, the communication apparatus 180 may include a plurality of processors, such as the processor 1801 and a processor 1807 in FIG. 18. Each of the processors may be a single-core (single-core) processor or may be a multi-core (multi-core) processor. The processor herein may include but is not limited to, at least one of the following types: a central processing unit (central processing unit, CPU), a microprocessor, a digital signal processor (DSP), a microcontroller unit (microcontroller unit, MCU), and a compute device used for running software like an artificial intelligence processor. Each compute device may include one or more cores used to execute software instructions to perform operations or processing.

During specific implementation, in an embodiment, the communication apparatus 180 may further include an output device 1805 and an input device 1806. The output device 1805 communicates with the processor 1801, and may display information in a plurality of manners. For example, the output device 1805 may be a liquid crystal display (liquid crystal display, LCD), a light emitting diode (light emitting diode, LED) display device, a cathode ray tube (cathode ray tube, CRT) display device, or a projector (projector). The input device 1806 communicates with the processor 1801, and may receive an input of a user in a plurality of manners. For example, the input device 1806 may be a mouse, a keyboard, a touchscreen device, a sensing device, or the like.

The communication apparatus 180 may also be referred to as a communication device sometimes, and may be a general-purpose device or a dedicated device. For example, the communication apparatus 180 may be a desktop computer, a portable computer, a network server, a palmtop computer (personal digital assistant, PDA), a mobile phone, a tablet computer, a wireless terminal device, an embedded device, or a device having a structure similar to that in FIG. 1. A type of the communication apparatus 180 is not limited in embodiments of this application.

In addition, the composition structure shown in FIG. 18 does not constitute a limitation on the communication apparatus. In addition to the components shown in FIG. 18, the communication apparatus 180 may include more or fewer parts than those shown in the figure, or combine some parts, or have different part arrangements.

The processor 1801 in the communication apparatus 180 shown in FIG. 18 may invoke the computer-executable instructions stored in the memory 1803, so that the communication apparatus 180 performs the communication method in the foregoing method embodiments.

Specifically, functions/implementation processes of the transceiver module 1702 and the processing module 1701 in FIG. 17 may be implemented by the processor 1801 in the communication apparatus 180 shown in FIG. 18 by invoking the computer-executable instructions stored in the memory 1803. Alternatively, functions/implementation processes of the processing module 1701 in FIG. 17 may be implemented by the processor 1801 in the communication apparatus 180 shown in FIG. 18 by invoking the computer-executable instructions stored in the memory 1803, functions/implementation processes of the transceiver module 1702 in FIG. 17 may be implemented through the communication interface 1804 in the communication apparatus 180 shown in FIG. 18.

It should be understood that one or more of the modules or units may be implemented by software, hardware, or a combination thereof. When any one of the modules or units is implemented by software, the software exists in a form of computer program instructions, and is stored in a memory, and a processor may be configured to execute the program instructions and implement the foregoing method procedures. The processor may be built in an SoC or ASIC, or may be an independent semiconductor chip. In addition to the core configured to execute software instructions to perform an operation or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory. When the communication apparatus is a chip system, the communication device may include a chip, or may include a chip and another discrete component. This is not specifically limited in this embodiment of this application.

Optionally, an embodiment of this application further provides a computer-readable storage medium. The computer-readable storage medium stores a computer program or instructions. When the computer program or the instructions are run on a communication apparatus, the communication apparatus is enabled to perform the method according to any one of the foregoing method embodiments or any implementation of the method embodiment.

Optionally, an embodiment of this application further provides a communication system. The communication system includes the network device in the foregoing method embodiments and the terminal device in the foregoing method embodiments.

All or a part of the foregoing embodiments may be implemented by using software, hardware, firmware, or any composition thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example descriptions of this application defined by the appended claims, and are considered as any of or all modifications, variations, combinations or equivalents that cover the scope of this application. It is clearly that, a person skilled in the art can make various modifications and variations to this application without departing from the scope of this application. This application is intended to cover these modifications and variations of this application provided that they fall within the scope of protection defined by the following claims of this application and their equivalent technologies.

## Claims

1. A communication method, wherein the method comprises:

determining first indication information, wherein the first indication information indicates a plurality of non-consecutive orthogonal frequency division multiplexing OFDM symbols, the plurality of OFDM symbols are used by a terminal device to send an SRS signal to a network device, and the plurality of OFDM symbols correspond to a same SRS bandwidth and a same antenna port of the terminal device; and
sending the first indication information.

2. The method according to claim 1, wherein the network device comprises N*M antenna ports, wherein M is a quantity of radio frequency chains comprised in the network device, and N is a positive integer greater than 1; and a quantity of the plurality of OFDM symbols is K, and K is a positive integer less than N.

3. The method according to claim 1 or 2, wherein the quantity and/or positions of the plurality of OFDM symbols are determined based on spatial sparsity characteristics of a channel between the terminal device and the network device.

4. The method according to any one of claims 1 to 3, wherein the method further comprises:

receiving the SRS signal on the plurality of OFDM symbols; and
determining channel state information based on the SRS signal.

5. The method according to any one of claims 1 to 4, wherein

the first indication information indicates a time-domain start position of a first time domain resource and positions of the plurality of OFDM symbols in the first time domain resource.

6. The method according to claim 5, wherein the time-domain start position of the first time domain resource is a time domain position of a 1st OFDM symbol among the plurality of OFDM symbols.

7. The method according to claim 5 or 6, wherein the positions of the plurality of OFDM symbols in the first time domain resource are indicated by at least one bit value.

8. The method according to any one of claims 1 to 7, wherein

the plurality of OFDM symbols are located in a same slot; or
the plurality of OFDM symbols are located in a plurality of adjacent slots.

9. The method according to any one of claims 1 to 8, wherein the method further comprises:

sending second indication information, wherein the second indication information indicates to delete a first OFDM symbol from the plurality of OFDM symbols; or
the second indication information indicates to add at least one OFDM symbol used for SRS transmission.

10. The method according to claim 9, wherein a position of the first OFDM symbol is indicated by the second indication information or is preset.

11. The method according to claim 10, wherein a position of the at least one OFDM symbol used for SRS transmission is indicated by the second indication information or is preset.

12. A communication method, wherein the method comprises:

receiving first indication information, wherein the first indication information indicates a plurality of non-consecutive orthogonal frequency division multiplexing OFDM symbols, the plurality of OFDM symbols are used by a terminal device to send an SRS signal to a network device, and the plurality of OFDM symbols correspond to a same SRS bandwidth and a same antenna port of the terminal device; and
determining the plurality of OFDM symbols based on the first indication information.

13. The method according to claim 12, wherein the network device comprises N*M antenna ports, wherein M is a quantity of radio frequency chains comprised in the network device, and N is a positive integer greater than 1; and a quantity of the plurality of OFDM symbols is K, and K is a positive integer less than N.

14. The method according to claim 12 or 13, wherein the quantity and/or positions of the plurality of OFDM symbols are determined based on spatial sparsity characteristics of a channel between the terminal device and the network device.

15. The method according to any one of claims 12 to 14, wherein the method further comprises:
sending the SRS signal on the plurality of OFDM symbols.

16. The method according to any one of claims 12 to 15, wherein
the first indication information indicates a time-domain start position of a first time domain resource and positions of the plurality of OFDM symbols in the first time domain resource.

17. The method according to claim 16, wherein the time-domain start position of the first time domain resource is a time domain position of a 1st OFDM symbol among the plurality of OFDM symbols.

18. The method according to claim 16 or 17, wherein the positions of the plurality of OFDM symbols in the first time domain resource are indicated by at least one bit value.

19. The method according to any one of claims 12 to 18, wherein

the plurality of OFDM symbols are located in a same slot; or
the plurality of OFDM symbols are located in a plurality of adjacent slots.

20. The method according to any one of claims 12 to 19, wherein the method further comprises:

receiving second indication information, wherein the second indication information indicates to delete a first OFDM symbol from the plurality of OFDM symbols; or
the second indication information indicates to add at least one OFDM symbol used for SRS transmission.

21. The method according to claim 20, wherein
a position of the first OFDM symbol is indicated by the second indication information or is preset.

22. The method according to claim 21, wherein
a position of the at least one OFDM symbol used for SRS transmission is indicated by the second indication information or is preset.

23. A communication apparatus, wherein the apparatus comprises: a processing module and a transceiver module;

the processing module is configured to determine first indication information; and
the transceiver module is configured to transmit the first indication information, wherein the first indication information indicates a plurality of non-consecutive orthogonal frequency division multiplexing OFDM symbols, the plurality of OFDM symbols are used by a terminal device to send an SRS signal to the communication apparatus, and the plurality of OFDM symbols correspond to a same SRS bandwidth and a same antenna port of the terminal device.

24. The apparatus according to claim 23, wherein the communication apparatus comprises N*M antenna ports, wherein M is a quantity of radio frequency chains comprised in the communication apparatus, and N is a positive integer greater than 1; and a quantity of the plurality of OFDM symbols is K, and K is a positive integer less than N.

25. The apparatus according to claim 23 or 24, wherein the quantity and/or of the plurality of OFDM symbols are determined based on spatial sparsity characteristics of a channel between the terminal device and the communication apparatus.

26. The apparatus according to any one of claims 23 to 25, wherein

the transceiver module is further configured to receive the SRS signal on the plurality of OFDM symbols; and
the processing module is further configured to determine channel state information based on the SRS signal.

27. The apparatus according to any one of claims 23 to 26, wherein

the first indication information indicates a time-domain start position of a first time domain resource and positions of the plurality of OFDM symbols in the first time domain resource.

28. The apparatus according to claim 27, wherein
the time-domain start position of the first time domain resource is a time domain position of a $1^{st}$ OFDM symbol among the plurality of OFDM symbols.

29. The apparatus according to claim 27 or 28, wherein
the positions of the plurality of OFDM symbols in the first time domain resource are indicated by at least one bit value.

30. The apparatus according to any one of claims 23 to 29, wherein

the plurality of OFDM symbols are located in a same slot; or
the plurality of OFDM symbols are located in a plurality of adjacent slots.

31. The apparatus according to any one of claims 23 to 30, wherein
the transceiver module is further configured to send second indication information, wherein the second indication information indicates to delete a first OFDM symbol from the plurality of OFDM symbols; or the second indication information indicates to add at least one OFDM symbol used for SRS transmission.

32. The apparatus according to claim 31, wherein a position of the first OFDM
symbol is indicated by the second indication information or is preset.

33. The apparatus according to claim 32, wherein a position of the at least one
OFDM symbol used for SRS transmission is indicated by the second indication information or is preset.

34. A communication apparatus, wherein the apparatus comprises: a processing module and a transceiver module;

the transceiver module is configured to receive first indication information, wherein the first indication information indicates a plurality of non-consecutive orthogonal frequency division multiplexing OFDM symbols, the plurality of OFDM symbols are used by the communication apparatus to send an SRS signal to a network device, and the plurality of OFDM symbols correspond to a same SRS bandwidth and a same antenna port of the communication apparatus; and

the processing module is configured to determine the plurality of OFDM symbols based on the first indication information.

35. The apparatus according to claim 34, wherein the network device comprises N*M antenna ports, wherein M is a quantity of radio frequency chains comprised in the network device, and N is a positive integer greater than 1; and a quantity of the plurality of OFDM symbols is K, and K is a positive integer less than N.

36. The apparatus according to claim 34 or 35, wherein the quantity and/or of the plurality of OFDM symbols are determined based on spatial sparsity characteristics of a channel between the communication apparatus and the network device.

37. The apparatus according to any one of claims 34 to 36, wherein
the transceiver module is further configured to send the SRS signal on the plurality of OFDM symbols.

38. The apparatus according to any one of claims 34 to 37, wherein
the first indication information indicates a time-domain start position of a first time domain resource and positions of the plurality of OFDM symbols in the first time domain resource.

39. The apparatus according to claim 38, wherein
the time-domain start position of the first time domain resource is a time domain position of a $1^{st}$ OFDM symbol among the plurality of OFDM symbols.

40. The apparatus according to claim 38 or 39, wherein
the positions of the plurality of OFDM symbols in the first time domain resource are indicated by at least one bit value.

41. The apparatus according to any one of claims 34 to 40, wherein

the plurality of OFDM symbols are located in a same slot; or
the plurality of OFDM symbols are located in a plurality of adjacent slots.

42. The apparatus according to any one of claims 34 to 41, wherein
the transceiver module is further configured to receive second indication information, wherein the second indication information indicates to delete a first OFDM symbol from the plurality of OFDM symbols; or the second indication information indicates to add at least one OFDM symbol used for SRS transmission.

43. The apparatus according to claim 42, wherein a position of the first OFDM symbol is indicated by the second indication information or is preset.

44. The apparatus according to claim 43, wherein a position of the at least one OFDM symbol used for SRS transmission is indicated by the second indication information or is preset.

45. A communication apparatus, wherein the communication apparatus comprises a processor and a memory, wherein the memory is configured to store computer instructions, and when the processor executes the instructions, the communication apparatus is enabled to perform the method according to any one of claims 1 to 11, or the communication apparatus is enabled to perform the method according to any one of claims 12 to 22.

46. A computer-readable storage medium, wherein the computer-readable storage medium comprises a computer program or instructions, and when the computer program or the instructions are run on a computer, the method according to any one of claims 1 to 11 is performed, or the method according to any one of claims 12 to 22 is performed.

47. A computer program product, wherein the computer program product comprises instructions, and when the instructions are run on a computer, the method according to any one of claims 1 to 11 is performed, or the method according to any one of claims 12 to 22 is performed.

48. A chip, wherein the chip comprises a processor, and the processor is configured to run instructions, so that an apparatus comprising the chip performs the method according to any one of claims 1 to 11, or an apparatus comprising the chip performs the method according to any one of claims 12 to 22.

[FIG. 1A]

HBF architecture for signal reception

Receive antenna

Digital beamforming

RF chain

RF chain

Connection network

[FIG. 1B]

HBF architecture for signal sending

Transmit antenna

Digital beamforming

RF chain

RF chain

Connection network

[FIG. 2]

EP 4 787 759 A1

[FIG. 3]

| Network device | | Terminal device |
|---|---|---|

S301: First indication information, indicating a plurality of non-consecutive SRS time domain resources, where the plurality of SRS time domain resources correspond to a same SRS bandwidth and a same antenna port of the terminal device

S302: SRS signal

26

[FIG. 4]

SRS receive beam scanning

Beam scanning and SRS reception on a network device side

SRS signal

B1    B2    B3    B4

Time domain

[FIG. 5]

Scatterer 1

Scatterer 2

Scatterer S

[FIG. 6]

M radio frequency chains

N*M antenna ports

$g_1^n \in C^{N*M}$

RF chain

RF chain

Baseband

$g_2^n \in C^{N*M}$

RF chain

RF chain

$g_M^n \in C^{N*M}$

[FIG. 7]

1st SRS time domain resource    2nd SRS time domain resource    Nth SRS time domain resource

Network device side

$g_1^1$    $g_M^1$    $g_M^2$    $g_M^N$

$g_1^2$    ...    $g_1^N$

SRS not transmitted    SRS transmitted    SRS transmitted

Terminal device side

[FIG. 8]

Measurement vector    Sensing matrix    Sparse matrix    Sparse vector

Not measured

Measured

=

1st SRS time domain resource

2nd SRS time domain resource

×    Spatial DFT basis    ×

Nth SRS time domain resource

[FIG. 9]

☑ SRS time domain resource
☐ Non-SRS time domain resource

High spatial sparsity

Low spatial sparsity

[FIG. 10]

☑ SRS time domain resource
☐ Non-SRS time domain resource

Position 1

Position 2

[FIG. 11]

Time-domain start position of
a first time domain resource

☑ SRS time domain resource
☐ Non-SRS time domain resource

0 0 1 1 0 1

[FIG. 12]

Time-domain start position of
a first time domain resource

▨ SRS time domain resource
☐ Non-SRS time domain resource

| | | | ▨ | ▨ 1 | 0 | ▨ 1 |

[FIG. 13]

Time-domain start position of
a first time domain resource

▨ SRS time domain resource
☐ Non-SRS time domain resource

| | 0 | 0 | ▨ 1 | ▨ 1 | 0 | ▨ 1 | |

⎵_____Slot 1_____⎵ ⎵_____Slot 2_____⎵

[FIG. 14]

Time-domain start position of
a first time domain resource

▨ SRS time domain resource
☐ Non-SRS time domain resource

| | ▨ 1 | 0 | ▨ 1 | |

⎵_____Slot 1_____⎵ ⎵_____Slot 2_____⎵

[FIG. 15]

SRS time
domain resource

Delete a last SRS
time domain resource

Non-SRS time
domain resource

[FIG. 16]

Added SRS time
domain resource

SRS time domain resource

Non-SRS time domain resource

| | 1 | 2 | 3 | 4 | 5 | |

[FIG. 17]

Processing module 1701

Storage module 1703

Transceiver module 1702

Communication apparatus 170

[FIG. 18]

180

1801

1807

1803

Processor

CPU 0

CPU 1

Processor

CPU 0

CPU 1

Memory

1802

1804

1805

1806

Communication interface

Output device

Input device

## INTERNATIONAL SEARCH REPORT

| International application No. |
|---|
| **PCT/CN2024/124487** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC:H04L H04W H04Q

Documentation searched other than minimum documentation to the extent that such documents are included in the fields searched

Electronic data base consulted during the international search (name of data base and, where practicable, search terms used)

CNTXT, ENTXTC, VEN, 3GPP: 信道, 探测, 波束, 非连续, 资源, 时域, 频域, 端口, SRS, beam, non-consecutive, resource, time, frequency, port

**C. DOCUMENTS CONSIDERED TO BE RELEVANT**

| Category* | Citation of document, with indication, where appropriate, of the relevant passages | Relevant to claim No. |
|---|---|---|
| X | WO 2020221081 A1 (HUAWEI TECHNOLOGIES CO., LTD.) 05 November 2020 (2020-11-05) description, pages 8, 10-11, and 19-20, and figures 4-6 | 1-48 |
| A | CN 116015576 A (BEIJING UNISOC COMMUNICATION TECHNOLOGY CO., LTD.) 25 April 2023 (2023-04-25) entire document | 1-48 |
| A | WO 2023011185 A1 (HUAWEI TECHNOLOGIES CO., LTD.) 09 February 2023 (2023-02-09) entire document | 1-48 |
| A | WO 2022241340 A1 (QUALCOMM INC.) 17 November 2022 (2022-11-17) entire document | 1-48 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 January 2025** | **13 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/124487**

| Patent document cited in search report | | | Publication date (day/month/year) | Patent family member(s) | | | Publication date (day/month/year) |
|---|---|---|---|---|---|---|---|
| WO | 2020221081 | A1 | 05 November 2020 | CN | 111865524 | A | 30 October 2020 |
| CN | 116015576 | A | 25 April 2023 | WO | 2023066202 | A1 | 27 April 2023 |
| | | | | EP | 4422106 | A1 | 28 August 2024 |
| WO | 2023011185 | A1 | 09 February 2023 | CN | 115696359 | A | 03 February 2023 |
| WO | 2022241340 | A1 | 17 November 2022 | EP | 4338341 | A1 | 20 March 2024 |
| | | | | US | 2022368485 | A1 | 17 November 2022 |
| | | | | CN | 117256119 | A | 19 December 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311332703X